(19) **Europäisches Patentamt**
**European Patent Office**
**Office européen des brevets**

(11) **EP 4 234 202 A1**

(12) **EUROPEAN PATENT APPLICATION**
published in accordance with Art. 153(4) EPC

(43) Date of publication:
**30.08.2023 Bulletin 2023/35**

(51) International Patent Classification (IPC):
**B29C 45/00** (2006.01)     **B29C 45/56** (2006.01)
**C08L 67/02** (2006.01)     **C08J 9/04** (2006.01)
**C08J 9/12** (2006.01)     **C08J 9/34** (2006.01)
**C08L 63/00** (2006.01)     **B29C 44/00** (2006.01)
**C08G 63/668** (2006.01)

(21) Application number: **21882734.3**

(22) Date of filing: **15.10.2021**

(52) Cooperative Patent Classification (CPC):
**B29C 44/00; B29C 45/00; B29C 45/56;**
**C08G 63/668; C08J 9/04; C08J 9/12; C08J 9/34;**
**C08L 63/00; C08L 67/02**

(86) International application number:
**PCT/JP2021/038277**

(87) International publication number:
**WO 2022/085593 (28.04.2022 Gazette 2022/17)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **20.10.2020  JP 2020176133**
            **27.04.2021  JP 2021074976**
            **13.07.2021  JP 2021115867**

(71) Applicant: **TOYOBO MC Corporation**
**Osaka 530-0001 (JP)**

(72) Inventors:
• **OYA Kenzo**
  **Otsu-shi, Shiga 520-0292 (JP)**
• **AKAISHI Takuya**
  **Otsu-shi, Shiga 520-0292 (JP)**
• **MORIO Eri**
  **Otsu-shi, Shiga 520-0292 (JP)**

(74) Representative: **Vossius & Partner**
**Patentanwälte Rechtsanwälte mbB**
**Siebertstraße 3**
**81675 München (DE)**

(54) **POLYESTER ELASTOMER RESIN COMPOSITION AND FOAM MOLDED BODY**

(57)    The present invention aims to provide a thermoplastic polyester elastomer resin composition suitable for foam molded product which exhibits light weight, excellent rebound resilience and excellent surface smoothness. The present invention provides a thermoplastic polyester elastomer resin composition for counter-pressure foam molding, containing a thermoplastic polyester elastomer and a thickener, wherein the thermoplastic polyester elastomer is prepared by bonding a hard segment and a soft segment, wherein the hard segment consists of polyester constituted from aromatic dicarboxylic acid and aliphatic and/or alicyclic diol as constituting components, wherein the soft segment is at least one member selected from a group consisting of aliphatic polyether, aliphatic polyester and aliphatic polycarbonate, wherein the thermoplastic polyester elastomer has a soft segment content of 25 to 90% by mass, and wherein a content of the thickener is 0. 05 to 4.5 parts by mass relative to 100 parts by mass of the thermoplastic polyester elastomer. The present invention also provides a foam molded product that includes a continuous phase formed of the thermoplastic polyester elastomer resin composition.

**Description**

Technical Field of the Invention

The present invention relates to a thermoplastic polyester elastomer resin composition suitable for counter-pressure foam molding. The present invention also relates to a foam molded product that includes a continuous phase formed of the thermoplastic polyester elastomer resin composition. In further detail, the foam molded product according to the present invention is a foam molded product having excellent rebound resilience and surface smoothness. It is thus possible to provide a foam molded product obtained by high foaming as high as double or more foaming.

Background Art

A thermoplastic polyester elastomer exhibits excellent injection molding ability and excellent extrusion molding ability, high mechanical strength, excellent rubber properties such as elasticity recovery, shock resistance and flexibility, as well as excellent cold resistance. Therefore, the thermoplastic polyester elastomer has been used in fields such as automobile parts, electric/electronic parts, fiber, film and sports parts.

A thermoplastic polyester elastomer exhibits excellent heat aging resistance, excellent light resistance and excellent abrasion resistance. Therefore, a thermoplastic polyester elastomer has been adopted as automobile parts and particularly for parts to be used under high-temperature environments and for interior parts of automobiles. In recent years, there has been a demand to reduce a weight of resin parts. As to one of the means for achieving such an object, application of foam molded product may be exemplified.

One of high foaming methods for weight reduction is a core-back foam injection molding method in which a mold is moved in the mold opening direction at the time of foaming. This method enables double or more high foaming and further makes fine cells in a foamed layer, therefore increasing the rebound resilience (Please see Patent Document 1).

The foam molded products manufactured by the core-back foam injection molding method, however, include non-foamed skin layers as surface layers and a foamed layer as an inner layer and thus have a sandwich structure including the non-foamed skin layers and the foamed layer in the thickness direction. Due to the presence of the non-foamed skin layers, the rebound properties of the foamed layer are reduced and the rebound resilience is thus decreased. In addition, such molded products have poor surface smoothness due to the generation of unevenness caused by defects, such as a swirl mark and a pit, on the surface of the molded products.

A short-shot foam injection molding method enables the production of foam molded products having a thin skin layer. The method, however, has problems of a low foaming ratio and is poor in lightness (Please see Patent Document 2).

As to a foamed product being advantageously used for car sheet, a highly repulsive urethane foamed product which exhibits rebound resilience of 60% or more has been advantageously adopted. In Patent Document 3, a method for preparing such urethane foamed product is proposed. However, a urethane foam product generates a cyan gas upon burning. Accordingly, there is a problem of environment pollution.

Prior Art Documents

Patent Documents

Patent Document 1: Japanese Patent No. 6,358,369
Patent Document 2: Japanese Patent Application Laid-Open (JP-A) No. 2011-68819
Patent Document 3: Japanese Patent Application Laid-Open (JP-A) No. 2003-342343

Disclosure of the Invention

Problem that the Invention is to Solve

The present invention has been achieved in view of the current status of the prior art as mentioned above. An object of the present invention is to provide a thermoplastic polyester elastomer resin composition suitable for foam molded product which exhibits light weight, excellent rebound resilience and excellent surface smoothness.

Means for Solving the Problem

In order to achieve the object, the inventors of the present invention have earnestly studied the composition of a thermoplastic polyester elastomer and a thickener to be blended. As a result, the inventors have found that a thermoplastic polyester elastomer resin composition adjusted to a specific melt viscosity level is prepared by using a thermoplastic polyester elastomer having a specific ratio between a hard segment and a soft segment and by blending a thickener into the thermoplastic polyester elastomer, and that the prepared thermoplastic polyester elastomer resin composition enables exertion of good foam moldability with fine foaming and surface smoothness, weight reduction by high foaming ratio, and acquisition a foam molded product having a very high rebound resilience. Further, the inventors have found that by applying a counter-pressure foam injection molding method in which a gas is infused into the cavity of a mold and a molten thermoplastic resin is injected under pressure, the good-quality polyester elastomer foam molded product can easily be produced and provided. That is, the inventors have found that the properties (such as melt tension, crystallization temperature, and gas retention) of thermoplastic polyester elastomer resin compositions are suitable for the counter-pressure foam molding method, and the thermoplastic polyester elastomers can thus endure a step of applying and releasing the pressure of counter-pressure and enables acquisition of the objective foam molded product that is highly foamed and has surface smoothness. The present invention has thus been completed.

Thus, the present invention is constituted from the following (1) to (8).

(1) A thermoplastic polyester elastomer resin composition for counter-pressure foam molding, containing a thermoplastic polyester elastomer and a thickener, wherein the thermoplastic polyester elastomer is prepared by bonding a hard segment and a soft segment, wherein the hard segment consists of polyester constituted from aromatic dicarboxylic acid and aliphatic and/or alicyclic diol as constituting components, wherein the soft segment is at least one member selected from a group consisting of aliphatic polyether, aliphatic polyester and aliphatic polycarbonate, wherein the thermoplastic polyester elastomer has a soft segment content of 25 to 90% by mass, and wherein a content of the thickener is 0.05 to 4.5 parts by mass relative to 100 parts by mass of the thermoplastic polyester elastomer.

(2) The thermoplastic polyester elastomer resin composition according to (1), wherein the thickener is a reactive compound having an epoxy group.

(3) The thermoplastic polyester elastomer resin composition according to (1) or (2), wherein an MFR of the thermoplastic polyester elastomer resin composition measured at a load of 2,160 g and a measurement temperature of 230°C is 5 to 30 g/10 min.

(4) A foam molded product including a continuous phase formed of the thermoplastic polyester elastomer resin composition according to any of (1) to (3), wherein the foam molded product is constituted from, as a surface layer ranging from a surface of the foam molded product to a depth of 1000 $\mu$m, a surface layer consisting of only a foamed region in which a non-foamed portion having a cell density of 10% or less is not present, or

the foam molded product has, as a surface layer ranging from a surface of the foam molded product to a depth of 1000 $\mu$m, a surface layer consisting of both a foamed region in which the non-foamed portion is present and a foamed region in which the non-foamed portion is not present,

and wherein the foam molded product has a density of 0.01 to 0.70 g/cm$^3$.

(5) The foam molded product according to (4), wherein the foamed region of the surface layer in which the non-foamed portion is not present has a flattened cell layer that includes cells having an average aspect ratio of 4.0 to 15.0.

(6) The foam molded product according to (4) or (5), wherein the foam molded product further has, in an inner layer deeper than the depth of 1000 $\mu$m from the surface, a circular cell layer that includes cells having an average aspect ratio of 1.0 to 2.0.

(7) The foam molded product according to any of (4) to (6), wherein the rebound resilience is 50% to 90%.

(8) The foam molded product according to (6) or (7), wherein the cells in the circular cell layer of the inner layer have an average cell diameter of 10 to 350 $\mu$m and a maximum cell diameter of 100 to 1000 $\mu$m.

Effects of the Invention

The foam molded product consisting of the thermoplastic polyester elastomer resin composition of the present invention is not only excellent in its light weight but also can achieve very high rebound resilience and excellent surface smoothness. Further, it exhibits a uniform foamed state, high heat resistance, high water resistance and high molding stability in spite of its high foaming ratio. Accordingly, the thermoplastic polyester elastomer resin foam molded product of the present invention can be applied even to parts which require high reliability. Further, by using the counter-pressure foam injection molding method, it is possible to acquire the foam molded product having the above-mentioned excellent properties and having any desired shape, simply by preparing a corresponding mold, without a need of post processing such as cutting.

Brief Description of the Drawings

FIG. 1 is a schematic constituting drawing for illustrating an example of a method for producing the foam molded product of the present invention.

FIGS. 2(X) to 2(Z) are schematic views of a foam molded product (B) according to the present invention, where FIG. 2 (X) is a surface view, FIG. 2 (Y) is a cross-sectional view cut along a surface w-w', and FIG. 2 (Z) is a cross-sectional view cut along a surface v-v'.

FIGS. 3(X) to 3(Z) are schematic views of a foam molded product (A) according to the present invention, where FIG. 3(X) is a surface view, FIG. 3 (Y) is a cross-sectional view cut along a surface w-w', and FIG. 3 (Z) is a cross-sectional view cut along a surface v-v'.

Mode for Carrying Out the Invention

Hereinafter, the foam molded product of the present invention will be illustrated in detail.

[Thermoplastic polyester elastomer]

The thermoplastic polyester elastomer used in the present invention is prepared by bonding a hard segment and a soft segment. The hard segment comprises polyester. As to an aromatic dicarboxylic acid constituting the polyester of the hard segment, common aromatic dicarboxylic acid can be widely used and there is no particular limitation therefor. As to a main aromatic dicarboxylic acid, it is desirable to use terephthalic acid or naphthalenedicarboxylic acid (to be more specific, among isomers thereof, 2,6-naphthalenedicarboxylic acid is preferred). Content of the aromatic dicarboxylic acid as such is preferred to be 70 molar % or more, and more preferred to be 80 molar % or more, in the total dicarboxylic acids constituting the polyester of the hard segment. As to other dicarboxylic acid components, there are exemplified an aromatic dicarboxylic acid such as diphenyl dicarboxylic acid, isophthalic acid and 5-sodium sulfoisophthalate; an alicyclic dicarboxylic acid such as cyclohexanedicarboxylic acid and tetrahydrophthalic anhydride; and an aliphatic dicarboxylic acid such as succinic acid, glutaric acid, adipic acid, azelaic acid, sebacic acid, dodecan-dioic acid, dimer acid and hydrogenated dimer acid. They can be used within such an extent that they do not greatly lower a melting point of the resin. Content thereof is 30 molar % or less, preferably 20 molar % or less of the whole acid components.

Further, as to an aliphatic or alicyclic diol constituting the polyester of the hard segment in the thermoplastic polyester elastomer used in the present invention, common aliphatic or alicyclic diol can be widely used and there is no particular limitation therefor. Mostly, it is preferred to be an alkylene glycol having 2 to 8 carbons. To be more specific, there are exemplified ethylene glycol, 1,3-propylene glycol, 1,4-butanediol, 1,6-hexanediol and 1,4-cyclohexane-dimethanol. Among them, any of ethylene glycol and 1,4-butanediol is preferred.

As to the component constituting the polyester of the above hard segment, that which consists of a butylene terephthalate unit (a unit consisting of terephthalic acid and 1,4-butanediol) or that which consists of a butylene naphthalate unit (a unit consisting of 2,6-naphthalenedicarboxylic acid and 1,4-butanediol) is preferred in view of physical property, molding ability and cost performance.

Furthermore, when the aromatic polyester which is advantageous as the polyester constituting the hard segment in the thermoplastic polyester elastomer used in the present invention is previously produced and is then copolymerized with a component of the soft segment, the aromatic polyester as such can be easily produced in accordance with a common production method for polyester. Still further, the polyester as such is preferred to have a number-average molecular weight of from 10000 to 40000.

The soft segment of the thermoplastic polyester elastomer used in the present invention is at least one member selected from a group consisting of aliphatic polyether, aliphatic polyester and aliphatic polycarbonate.

As to the aliphatic polyether, there are exemplified poly(ethylene oxide) glycol, poly(propylene oxide) glycol, poly(tetramethylene oxide) glycol, poly(hexamethylene oxide) glycol, poly(trimethylene oxide) glycol, a copolymer of ethylene oxide with propylene oxide, an adduct of poly(propylene oxide) glycol with ethylene oxide and a copolymer of ethylene oxide with tetrahydrofuran. Among them, poly(tetramethylene oxide) glycol and the adduct of poly (propylene oxide) glycol with ethylene oxide are preferred in view of elastic property.

As to the aliphatic polyester, there are exemplified poly($\varepsilon$-caprolactone), polyenantho-lactone, polycaprylolactone and poly(butylene adipate). Among them, poly($\varepsilon$-caprolactone) and poly (butylene adipate) are preferred in view of the elastic property.

The aliphatic polycarbonate is preferred to mainly consist of an aliphatic diol group having 2 to 12 carbons. As to the aliphatic diol as such, there are exemplified ethylene glycol, 1,3-propylene glycol, 1,4-butanediol, 1,5-pentanediol, 1,6-hexanediol, 1,8-octanediol, 2,2-dimethyl-1,3-propanediol, 3-methyl-1,5-pentanediol, 2,4-diethyl-1,5-pentanediol, 1,9-nonanediol and 2-methyl-1,8-octanediol. An aliphatic diol having 5 to 12 carbons is preferred particularly in view of flexibility and low-temperature characteristics of the resulting thermoplastic polyester elastomer. Those components may be used either solely or jointly by combining two or more thereof if necessary depending upon the cases mentioned below.

As to the aliphatic polycarbonate-diol constituting the soft segment of the thermoplastic polyester elastomer used in the present invention having good low-temperature characteristics, that having a low melting point (such as 70°C or lower) and a low glass transition temperature is preferred. An aliphatic polycarbonate-diol consisting of 1,6-hexanediol which is usually used in forming a soft segment of a thermoplastic polyester elastomer has a glass transition temperature of as low as about -60°C and has a melting point of as low as about 50°C. Therefore, its low-temperature characteristics thereof are good. Besides the above, an aliphatic polycarbonate-diol prepared by copolymerization of the above aliphatic polycarbonate-diol with an appropriate amount of 3-methyl-1,5-pentanediol for example has somewhat higher glass transition point as compared with the starting aliphatic polycarbonate-diol but its melting point lowers or it becomes amorphous whereby it corresponds to an aliphatic polycarbonate-diol having good low-temperature characteristics. Moreover, in an aliphatic polycarbonate-diol consisting of, for example, 1, 9-nonanediol and 2-methyl-1,8-octanediol, its melting point and glass transition temperature are as sufficiently low as about 30°C and about -70°C, respectively whereby it corresponds to an aliphatic polycarbonate-diol having good low-temperature characteristics.

As to the soft segment of the thermoplastic polyester elastomer used in the present invention, an aliphatic polyether is preferred in view of solving the problems of the present invention.

The thermoplastic polyester elastomer used in the present invention is preferred to be a copolymer constituted from terephthalic acid, 1,4-butanediol and poly(tetramethylene oxide) glycol as main components. It is preferred that, in the dicarboxylic acid components constituting the thermoplastic polyester elastomer, terephthalic acid is 40 molar % or more, more preferred to be 70 molar % or more, further preferred to be 80 molar % or more, and especially preferred to be 90 molar % or more. It is preferred that, in the glycol components constituting the thermoplastic polyester elastomer, a total amount of 1,4-butanediol and poly (tetramethylene oxide) glycol is 40 molar % or more, more preferred to be 70 molar % or more, further preferred to be 80 molar % or more, and especially preferred to be 90 molar % or more.

A number-average molecular weight of the above poly (tetramethylene oxide) glycol is preferred to be from 500 to 4000. When the number-average molecular weight is less than 500, elastomer characteristic property may be hardly achieved. On the other hand, when the number-average molecular weight is more than 4000, compatibility with the hard segment may lower whereby it may become difficult to be copolymerized into a block form. The number-average molecular weight of the above poly (tetramethylene oxide) glycol is more preferred to be not less than 800 and not more than 3000, and further preferred to be not less than 1000 and not more than 2500.

In the thermoplastic polyester elastomer used in the present invention, a content of the soft segment is 25 to 90% by mass, preferred to be 40 to 90% by mass, more preferred to be 55 to 90% by mass, and further preferred to be 65 to 90% by mass. When the content of the soft segment is less than 25% by mass, crystallinity is high whereby the rebound resilience may be inferior while, when it is more than 90% by mass, crystallinity lowers too much whereby the foam moldability may be inferior.

The thermoplastic polyester elastomer used in the present invention can be produced by known methods. For examples, there are a method wherein a lower alcohol diester of dicarboxylic acid is subjected to a transesterification with an excessive amount of low-molecular glycol and a soft segment component in the presence of a catalyst and the resulting reaction product is subjected to a polycondensation; a method wherein a dicarboxylic acid is subjected to an esterification with an excessive amount of glycol and a soft segment component in the presence of a catalyst and the resulting reaction product is subjected to a polycondensation; a method wherein polyester of a hard segment is previously produced and a soft segment component is added thereto followed by randomizing by means of a transesterification; a method wherein a hard segment and a soft segment are connected using a chain linking agent; and, when poly(ε-caprolactone) is used as a soft segment, a method wherein an ε-caprolactone monomer is subjected to an addition reaction to a hard segment. Any of those methods may be used.

[Thickener]

The thickener used in the present invention is a reactive compound having a functional group reactable with a hydroxyl group or a carboxyl group contained in the thermoplastic polyester elastomer (hereinafter, sometimes simply called a reactive compound). The reactable functional group is preferably at least one selected from the group consisting of an epoxy group (glycidyl group), an acid anhydride group, a carbodiimide group, and an isocyanate group. The thickener contains two or more of the functional groups per molecule. The functional group is more preferred to be an epoxy group (glycidyl group). The thickener used in the present invention is preferably a reactive compound having an epoxy group (glycidyl group) or a reactive compound having a carbodiimide group, and is more preferably a reactive compound having an epoxy group (glycidyl group). Hereinafter, "the reactive compound having an epoxy group (glycidyl group) " is sometimes called "a compound having an epoxy group". The thickener is reacted and bonded with a polymer chain of the thermoplastic polyester elastomer and thus serves as a crosslinking agent.

When the thickener is a compound having a epoxy group, preferred one is a multifunctional epoxy compound having two or more epoxy groups. To be more specific, there are exemplified 1,6-dihydroxynaphthalene diglycidyl ether or 1,3-bis- (oxysilanylmethoxy)benzene having two epoxy groups; 1,3,5-tris-(2,3-epoxypropyl)-1,3,5-triazine-2,4,6-(1H,3H,5H )-trione or diglycerol triglycidyl ether having three epoxy groups; and a polycondensate of 1-chloro-2,3-epoxypropane with formaldehyde and 2,7-naphthalenediol and pentaerythritol polyglycidyl ether having four epoxy groups. Among them, a multifunctional epoxy compound having a heat resistant skeleton is preferred. Particularly preferred one is a two-functional or four-functional epoxy compound having a naphthalene structure as the skeleton or a three-functional epoxy compound having a triazine structure as the skeleton. Two-functional or three-functional epoxy compound is preferred, considering an effect of increasing the melt viscosity of the thermoplastic polyester elastomer or an effect of efficiently lowering an acid value of the thermoplastic polyester elastomer, or considering a degree of generation of gelation by aggregation/solidification of the epoxy *per se.*

Besides the above, there is also exemplified a copolymer which contains two or more glycidyl groups in a molecule, has a weight-average molecular weight of 4000 to 25000, and consists of 20 to 99% by mass of vinyl aromatic monomer (X), 1 to 80% by mass of glycidyl (meth)acrylate (Y), and 0-79% by mass of a vinyl group-containing monomer containing no epoxy group (Z) being other than (X).

The thickener used in the present invention is preferably a styrene-based copolymer which consists of two or more glycidyl groups in a molecule, has a weight-average molecular weight of 4000 to 25000, and consists of 20 to 99% by mass of vinyl aromatic monomer (X), 1 to 80% by mass of glycidyl (meth)acrylate (Y), and 0-79% by mass of a vinyl group-containing monomer containing no epoxy group (Z) being other than (X) because it has good compatibility with the thermoplastic polyester elastomer and further widens the molecular weight distribution. More preferred one is a copolymer consisting of 20 to 99% by mass of (X), 1 to 80% by mass of (Y) and 0 to 40% by mass of (Z) . Further preferred one is a copolymer consisting of 25 to 90% by mass of (X), 10 to 75% by mass of (Y) and 0 to 35% by mass of (Z). These types of composition affect the concentration of the functional group contributing to the reaction with the thermoplastic polyester elastomer. Therefore, it is preferred to suitably control the composition within the range described above.

As to the vinyl aromatic monomer (X), there are exemplified styrene, $\alpha$-methyl-styrene, etc. As to the glycidyl (meth)acrylate (Y), there are exemplified glycidyl (meth)acrylate, (meth)acrylate having a cyclohexane oxide structure, (meth)acryl glycidyl ether, etc. Among them, glycidyl (meth)acrylate is preferred in view of its high reactivity. As to the vinyl group-containing monomer containing no epoxy group (Z) being other than (X), there are exemplified alkyl (meth)acrylate having an alkyl group (which may be either linear or branched chain) of 1 to 22 carbon(s) [such as methyl (meth)acrylate, ethyl (meth)acrylate, propyl (meth)acrylate, butyl (meth)acrylate, 2-ethylhexyl (meth)acrylate, cyclohexyl (meth)acrylate, stearyl (meth)acrylate and methoxyethyl (meth)acrylate]; polyalkylene glycol (meth)acrylate; alkoxyalkyl (meth)acrylate; hydroxyalkyl (meth)acrylate; dialkylamino (meth)acrylate; benzyl (meth)acrylate; phenoxyalkyl (meth)acrylate; isobornyl (meth)acrylate; and alkoxysilylalkyl (meth)acrylate. In addition, (meth)acrylamide, (meth)acryl dialkylamide, vinyl ester (such as vinyl acetate), vinyl ether, an aromatic vinyl-type monomer (such as (meth) allyl ether) and an $\alpha$-olefin monomer (such as ethylene and propylene), etc. can also be used as the vinyl group-containing monomer containing no epoxy group (Z) being other than (X).

A weight-average molecular weight of the above copolymer is preferred to be 4000 to 25000, and more preferred to be 5000 to 15000. When the copolymer has a weight-average molecular weight of less than 4000, an unreacted portion of the copolymer may possibly be volatilized in a molding step or may possibly bleed out onto the surface of a molded article and thus cause a stain on the surface. On the other hand, when the copolymer has a weight-average molecular weight of more than 25000, the copolymer is slow in reaction with the thermoplastic polyester elastomer. Therefore, not only an effect of increasing the molecular weight is insufficient but also the compatibility with the thermoplastic polyester elastomer is deteriorated. As a result, the intrinsic properties of the thermoplastic polyester elastomer, such as heat resistance, are highly probably degraded.

The copolymer preferably has an epoxy value of 400 to 2500 equivalent/1 $\times$ $10^6$ g, more preferably 500 to 1500 equivalent/1 $\times$ $10^6$ g, and further preferably 600 to 1000 equivalent/1 $\times$ $10^6$ g. The copolymer having an epoxy value of less than 400 equivalent/1 $\times$ $10^6$ g sometimes does not exert a thickening effect. On the other hand, the copolymer having an epoxy value of more than 2500 equivalent/1 $\times$ $10^6$ g sometimes has an excessive thickening effect and thus adversely affects the moldability.

When the thickener is a compound having a carbodiimide group, a polycarbodiimide compound can be used. The polycarbodiimide compound is advantageous because it efficiently reduces the acid value.

The polycarbodiimide compound which can be used in the present invention may be a polycarbodiimide having two or more carbodiimide groups (being a structure of -N=C=N-) in a molecule. Examples thereof are aliphatic polycar-

6

bodiimide, alicyclic polycarbodiimide, aromatic polycarbodiimide and a copolymer thereof. Preferred one is an aliphatic polycarbodiimide compound or an alicyclic polycarbodiimide compound.

The polycarbodiimide compound can be prepared by, for example, removing carbon dioxide from a diisocyanate compound. As to the diisocyanate compound which can be used here, there are exemplified 4, 4' -diphenyl methane diisocyanate, 4, 4'-diphenyl dimethylmethane diisocyanate, 1, 3-phenylene diisocyanate, 1, 4-phenylene diisocyanate, 2, 4-tolylene diisocyanate, 2, 6-tolylene diisocyanate, 1, 5-naphthylene diisocyanate, hexamethylene diisocyanate, dicyclohexylmethane diisocyanate, cyclohexane-1,4-diisocyanate, xylylene diisocyanate, isophorone diisocyanate, methylcyclohexane disocyanate, tetramethylxylylene diisocyanate, 1,3,5-tri-isopropylphenylene 2,4-diisocyanate. Only one of them may be used or two or more of them may be copolymerized and used. It is also possible that a branched structure is introduced or a functional group other than carbodiimide group or isocyanate group is introduced by means of copolymerization. Further, although terminal isocyanate may be used as it is, a degree of polymerization may also be controlled by reacting the terminal isocyanate. A part of the terminal isocyanate may also be blocked.

As to the polycarbodiimide compound, an alicyclic polycarbodiimide derived from dicyclohexylmethane diisocyanate, cyclohexane-1,4-diisocyanate, isophorone diisocyanate, etc. is particularly preferred. A polycarbodiimide derived from dicyclohexylmethane diisocyanate or isophorone diisocyanate is particularly preferred.

It is preferable that the polycarbodiimide compound contains 2 to 50 carbodiimide groups per molecule, in view of stability and handling property. It is more preferable that the polycarbodiimide compound contains 5 to 30 carbodiimide groups per molecule. A number of carbodiimide (or, in other words, a number of carbodiimide group) in a polycarbodiimide molecule corresponds to a degree of polymerization in the case of a polycarbodiimide prepared from a diisocyanate compound. For example, the degree of polymerization of a polycarbodiimide prepared by connection of 21 diisocyanate compounds in a chain form is 20, and a number of carbodiimide group in a molecular chain is 20. Usually, a polycarbodiimide compound is a mixture of molecules having various lengths, and thus a number of the carbodiimide group is expressed by a mean value. When a polycarbodiimide compound has a number of the carbodiimide group within the above range and is solid at about a room temperature, it can be made into powder whereby it is excellent in terms of workability and compatibility upon mixing with the thermoplastic polyester elastomer and is preferred in view of uniform reactivity and resistance to bleeding out as well. Incidentally, the number of the carbodiimide group can be measured, for example, by a common method (a method wherein a back titration is conducted with hydrochloric acid after dissolving with an amine).

In view of safety and handling property, it is preferred that the polycarbodiimide compound has an isocyanate group in a terminal thereof and a content of the isocyanate group is from 0.5 to 4% by mass. More preferably, the content of the isocyanate group is from 1 to 3% by mass. Particularly preferred one is a polycarbodiimide derived from dicyclohexylmethane diisocyanate or isophorone diisocyanate and having the content of the isocyanate group within the above-mentioned range. Incidentally, the content of the isocyanate group can be measured by a common method (a method wherein a back titration is conducted with hydrochloric acid after dissolving with an amine).

When the thickener is a compound having a isocyanate group, there are exemplified the above-mentioned polycarbodiimide compound containing isocyanate group and an isocyanate compound which is used as a material for the above-mentioned polycarbodiimide compound.

When the thickener is a compound having an acid anhydride group, a compound having 2 to 4 anhydrides in a molecule is preferred in view of stability and handling property. Examples of such a compound are phthalic anhydride, trimellitic anhydride and pyromellitic anhydride.

The content of the thickener is 0.05 to 4.5 parts by mass, preferably 0.1 to 4 parts by mass, and more preferably 0.1 to 3 parts by mass relative to 100 parts by mass of the thermoplastic polyester elastomer.

When the thickener to be contained is less than 0.05 parts by mass, an aimed molecular chain extending effect is not sufficient. When the thickener to be contained is more than 4.5 parts by mass, the thickener has an excessive thickening effect, and thus tend to adversely affect the moldability and affect the mechanical properties of a molded article. When the thickener is an epoxy compound and the amount thereof is more than 4.5 parts by mass, the epoxy compound sometimes, due to concentrated curing, generates unevenness on the surface of a molded article. When the thickener is a carbodiimide compound and the amount thereof is more than 4.5 parts by mass, the polycarbodiimide compound tends to, due to the basicity thereof, cause hydrolysis of the thermoplastic polyester elastomer and affect the mechanical properties.

Preferable thickener is a compound having an epoxy group, particularly an epoxy-type copolymer which contains two or more glycidyl groups in a molecule, has a weight-average molecular weight of 4000 to 25000, and consists of 20 to 99% by mass of vinyl aromatic monomer (X), 1 to 80% by mass of glycidyl (meth)acrylate (Y), and 0-79% by mass of a vinyl group-containing monomer containing no epoxy group (Z) being other than (X). When a compound having a functional group exhibiting a quick reactivity such as a carbodiimide group is used together with an epoxy compound, a molecular weight distribution of a resin composition after the thickening tends to become narrow. As a result, there is a possibility that an injection pressure upon an injection molding becomes high, foaming nucleus disappears and the foaming ratio lowers. Accordingly, in the resin composition according to the present invention, it is preferred that the epoxy compound and the carbodiimide compound are not used together as the thickener.

[Thermoplastic polyester elastomer resin composition]

Further, various additives, fillers, and other polymers other than the above thickener may be blended in the thermoplastic polyester elastomer used in the present invention depending upon the object. A type of the additives is not particularly limited but various types of additives which are commonly used for the foam molding can be used. To be more specific, examples of the additives are known antioxidant (of hindered phenol-type, sulfur-type, phosphorus-type, amine-type, etc.), light stabilizer (of hindered amine-type, benzotriazole-type, benzophenone-type, benzoate-type, triazole-type, nickel-type, salicylic-type, etc.), ultraviolet absorber, lubricant, crystal nucleating agent, filler, flame retardant, flame retardant aid, releasing agent, antistatic agent, molecule adjusting agent (such as a peroxide), metal inactivating agent, organic and inorganic nucleating agent, neutralizing agent, antacid, antibacterial agent, fluorescent bleaching agent and organic and inorganic pigment or dye as well as organic and inorganic phosphorus compound used for imparting flame retardancy and thermal stability. Blending amount (content) of the additives, fillers, and other polymers may be appropriately selected within such an extent that it does not deteriorate formation of foams, etc. and the blending amount (content) being usually used for the molding of thermoplastic resin may be adopted. In the thermoplastic polyester elastomer resin composition according to the present invention, the total of the thermoplastic polyester elastomer and the thickener preferably accounts for 80% by mass or more, more preferably accounts for 90% by mass or more, and further preferably accounts for 95% by mass or more.

The thermoplastic polyester elastomer resin composition according to the present invention can be produced by mixing the components described above, and various additives, a filler, and another kind of polymer depending on necessity and melt-kneading the materials. As to the melt-kneading method, any method known to a person skilled in the art may be used, and a uniaxial extruder, a biaxial extruder, a pressure kneader, a Banbury mixer, or the like can be used. Among them, it is preferable to use the biaxial extruder.

As to a method for determining the composition and the composition ratio of the thermoplastic polyester elastomer used in the present invention, it is possible to use calculation based on the integral ratio of protons in $^1$H-NMR measured using a sample dissolved in a solvent such as deuterated chloroform.

The thermoplastic polyester elastomer resin composition according to the present invention preferably has an MFR (melt flow rate) of 5 to 30 g/10 min when the MFR is measured at a load of 2, 160 g and a measurement temperature of 230 °C according to the measuring method described in ASTM D1238 . The thermoplastic polyester elastomer resin composition according to the present invention is, due to having an MFR of 5 to 30 g/10 min, less likely to cause breakage of the walls of cells when foam-molded, and thus can give a foam molded product with a high foaming ratio in which fine cells have been formed. Particularly, when subjected to counter-pressure foam molding described later, the thermoplastic polyester elastomer resin composition according to the present invention exhibits the above effects. When having an MFR of less than 5 g/10 min, the thermoplastic polyester elastomer resin composition tends to decrease the flowability and decrease the foam followability. When having an MFR of more than 30 g/10 min, the thermoplastic polyester elastomer resin composition tends to generate coarse cells and decrease the foaming properties.

The thermoplastic polyester elastomer resin composition according to the present invention contains a reactant produced by reacting the thermoplastic polyester elastomer with the thickener, but may also contain a portion of the thermoplastic polyester elastomer that has not been reacted with the thickener and a free portion of the thickener. This is because it is difficult to completely react the thermoplastic polyester elastomer with the thickener. The content relationship between the thermoplastic polyester elastomer and the thickener is, in the thermoplastic polyester elastomer resin composition, considered on the basis of the mass derived from the thickener relative to the mass derived from the thermoplastic polyester elastomer. The content relationship also applies to in the foam molded product described later.

[Foam molded product]

The foam molded product according to the present invention can be obtained using the thermoplastic polyester elastomer resin composition and obtained without any post processing such as cutting. That is, the molded product does not have any cut surface. The cut surface referred to in this case means a surface obtained by cutting a non-foamed skin layer or the like from a foam molded product and does not mean a surface generated by removing an unnecessary portion, such as a gate portion, derived from a mold.

The foam molded product according to the present invention is a foam molded product (A) which is constituted from, as a surface layer ranging from a surface of the foam molded product to a depth of 1000 $\mu$m, a surface layer consisting of only a foamed region in which a non-foamed portion having a cell density of 10% or less is not present (hereafter, it may be abbreviated as surface layer (A)), or the foam molded product (B) which has, as a surface layer ranging from a surface of the foam molded product to a depth of 1000 $\mu$m, a surface layer consisting of both a foamed region in which the non-foamed portion is present and a foamed region in which the non-foamed portion is not present(hereafter, it may be abbreviated as surface layer (B)). The surface layer referred to herein means a surface layer consisting of a single surface. In the cases of, for example, the foam molded product having a rectangular parallelepiped shape, it has six surface layers, and a surface layer therefore means one of the six surface layers. In the cases of the foam molded product having a rectangular parallelepiped shape, in the foam molded product (A), all of six surfaces consist of the surface layers (A), whereas in the foam molded product (B), at least one surface consists of the surface layer (B). A foam molded product that is produced by a so-called core-back foam injection molding method and has a non-foamed skin layer has a rectangular parallelepiped shape, wherein an upper surface and a lower surface consist of only the foamed region in which the non-foamed portion is present, and wherein side surfaces consist of only the foamed region in which the non-foamed portion is not present. According to the above definition, such foam molded product does not correspond to the foam molded product (B) . In the total area of a single surface of the foam molded product (B), the area of the foamed region in which the non-foamed portion is present is preferably 60% or less, more preferably 50% or less, and further preferably 30% or less. A foam molded product having an area of 0% for the foamed region in which the non-foamed portion is present is the foam molded product (A). In the foam molded product (B), the proportion of the area of the foamed region in which the non-foamed portion is present to the total surface area of the foam molded product is preferably 50% or less, more preferably 40% or less, and further preferably 25% or less. The foam molded product (A) has improved rebound resilience because the non-foamed portion including no cell is not present in any surface layer. In the foam molded product (B), the foamed region in which the non-foamed portion is present includes less cells and therefore has low rebound resilience, whereas the foamed region in which the non-foamed portion is not present has high rebound resilience. Therefore, the foam molded product (B) can have, as one foam molded product, different rebound resilience levels depending on location. The surface of the foam molded product according to the present invention does not necessarily need to be a flat surface, and may be a curved surface or a surface including projections or the like. One point of the present invention is that it is possible to obtain a foam molded product having any desired shape by preparing a mold corresponding to the shape.

The non-foamed portion means a phase that hardly includes cells and is formed of the thermoplastic polyester elastomer resin composition, and is a portion having a cell density of 10% or less. Here, the cell density is calculated through image processing of a cross-sectional photograph of a cross-sectional-observation sample in the surface layer of the foam molded product obtained by using a scanning electron microscope. Specifically, the calculation is done as described in the section of Examples. In the foam molded product according to the present invention, a portion not corresponding to the non-foamed portion is called a foamed portion or a foamed layer. The surface of the foamed portion consists of a very thin resin layer (so-called thin skin) formed by contact of an unfoamed molten resin or a foamed molten resin with the surface of a mold. The thickness of the resin layer is 50 $\mu$m or less. In the present invention, whether a portion corresponds to "the non-foamed portion having a cell density of 10% or less" is judged by measuring a region of 200 $\mu$m $\times$ 200 $\mu$m. Accordingly, the thin resin layer on the surface of the foamed portion does not correspond to "the non-foamed portion having a cell density of 10% or less".

The foam molded product according to the present invention does not have a sandwich structure in which the non-foamed layer is entirely provided on both sides of the foamed layer (in other words, a structure in which the foamed layer is, from both sides thereof, sandwiched between the non-foamed layers). The foam molded product according to the present invention is the foam molded product (A) or the foam molded product (B) described above. The foam molded product (A) is, in another expression, a foam molded product having no non-foamed layer and singly consisting of the foamed layer. The foam molded product (B) is, in another expression, a foam molded product in which the non-foamed portion (non-foamed skin layer) is present in only a part of a surface of the foam molded product. The size of the foam molded product according to the present invention is not particularly limited, and the foam molded product having any desired size can be obtained as long as a mold thereof can be manufactured.

In the present invention, cells having an aspect ratio of 2.0 or less are considered to be circular cells, whereas cells having an aspect ratio of more than 2.0 are considered to be flattened cells.

In the foam molded product according to the present invention, a flattened cell layer that includes cells have a large average aspect ratio is preferably present in the foamed region of the surface layer in which the non-foamed portion is not present. By increasing the aspect ratio of the flattened cells in the surface layer, the surface of the foam molded product becomes smooth and thus has excellent appearance. The flattened cell layer therefore preferably has an average aspect ratio of 4.0 to 15.0. When the flattened cell layer has an average aspect ratio of less than 4.0, unevenness may be generated on the surface of the molded product and the surface smoothness tends to be impaired. When the flattened cell layer has an average aspect ratio of more than 15.0, unevenness may be generated on the surface of the molded product and the surface smoothness tends to be impaired because cells are stretched and thereby broken. In order to achieve excellent surface smoothness, the flattened cell layer more preferably has an average aspect ratio of 4.0 to 10.0. Further, a circular cell layer that includes cells having a small average aspect ratio is preferably present in an inner layer deeper than 1000 $\mu$m from the surface. By decreasing the aspect ratio of the circular cells in the inner layer, the rebound resilience is improved. The circular cell layer therefore preferably has an average aspect ratio of 1.0 to 2.0. When the circular cell layer has an average aspect ratio of more than 2.0, the rebound resilience tends to be decreased.

A reason why the cells in the surface layer are formed as flattened cells is because the resin composition flows along the surface of a mold during the foam molding. In a preferred aspect of the foam molded product according to the present invention, the foamed region of the surface layer in which the non-foamed portion is not present preferably has the flattened cell layer that includes cells having an average aspect ratio of 4.0 to 15.0, and the inner layer deeper than 1000 $\mu$m from the surface has the circular cell layer that includes cells having an average aspect ratio of 1.0 to 2.0.

The foamed layer includes a resin continuous phase and independent cells. Here, the resin continuous phase means a portion having no hollow and formed of the cured thermoplastic polyester elastomer resin composition. In the above-mentioned circular cell layer in the inner layer deeper than the depth of 1000 $\mu$m from the surface, the properties of the cells differ depending on the size thereof as long as the diameter of the cells (cell diameter) thereof is uniform and is not various. In order to exert high rebound resilience, a smaller cell diameter is advantageous. Specifically, an average cell diameter of 10 to 350 $\mu$m is preferable. When the average cell diameter is less than 10 $\mu$m, the molded product has a low internal pressure, resulting in insufficient pressure during the non-foamed skin layer formation, and tends to deteriorate the appearance such as a sink mark. On the other hand, when the average cell diameter is more than 350 $\mu$m, the molded product has low load bearing and tends to decrease the rebound resilience. When the circular cell layer even includes cells having a small average cell diameter but a high cell density, the circular cell layer has poor rebound resilience. Therefore, in order to allow the foam molded product having a density range described later to exert high rebound resilience, the average cell diameter is more preferably 50 to 350 $\mu$m, further preferably 100 to 300 $\mu$m, and particularly preferably 130 to 300 $\mu$m. The circular cell layer mostly includes the fine cells having an average cell diameter of 10 to 350 $\mu$m, but also includes coarse cells having a little larger cell diameter. The reason why the coarse cells are generated is supposed as follows. When a molten resin composition has, in continuous molding, unstable melt viscosity, such as reduced viscosity, at the time of melt-mixing the molten resin composition with the foaming agent in a molding machine during a foam molding process, it is difficult to uniformly melt-mix the molten resin composition with the foaming agent. Accordingly, the foaming agent is nonuniformly dispersed, whereby the coarse cells are generated. In order to allow the foam molded product to exert high rebound resilience, the coarse cells preferably have a maximum cell diameter of 100 to 1000 $\mu$m. When the coarse cells have a maximum cell diameter of more than 1000 $\mu$m, the foam molded product tends to have low load bearing and a low rebound resilience. In order to achieve the density of the foam molded product required for exerting high rebound resilience described later, the coarse cells more preferably have a maximum cell diameter of 200 to 1000 $\mu$m, and further preferably have a maximum cell diameter of 400 to 950 $\mu$m.

Density of the foam molded product of the present invention is preferred to be 0.01 to 0.70 g/cm$^3$. Density of a common polyester elastomer is about 1.0 to 1.4 g/cm$^3$. Accordingly, it can be said that the foam molded product of the present invention has sufficiently light weight. Density of the foam molded product of the present invention is more preferred to be 0.1 to 0.60 g/cm$^3$, further preferred to be 0.1 to 0.45 g/cm$^3$, and particularly preferred to be 0.1 to 0.35 g/cm$^3$. When the density is less than 0.01 g/cm$^3$, sufficient strength may not be achieved and mechanical strength may become inferior while, when it is more than 0.70 g/cm$^3$, rebound resilience may become inferior.

The foam molded product according to the present invention has an average cell diameter within a specific range and a density within a specific range. As a result, the foam molded product according to the present invention can realize a high rebound resilience. Further, by appropriately selecting a configuration described above, the foam molded product according to the present invention can realize a higher rebound resilience of 50 to 90%. In order to allow the foam molded product to exert high rebound properties, the foam molded product according to the present invention preferably has a rebound resilience of 60 to 90%.

The foam molded product according to the present invention not only is excellent in lightness but also exerts a very high rebound resilience and has excellent surface smoothness. Further, the foam molded product according to the present invention has a uniformly foamed state despite its high foaming ratio, high heat resistance, water resistance, and molding stability, and can therefore be provided as a polyester-based foam molded product applicable to components that require high reliability. Accordingly, the foam molded product according to the present invention is, for example, usable in the applications described below. The application of the foam molded product according to the present invention, however, is not limited to the following applications.

Examples of the applications include vehicle materials, civil engineering products, building products, home electrical appliances, office automation equipment, sporting goods, stationery products, toys, medical products, food containers, and agricultural materials. Specific examples include vehicle mechanical members, engine components, vehicle exterior materials, vehicle interior materials, cushion materials, sealing materials, car seats, deadenings, door trims, sun visors, vehicle damping materials, acoustic materials, and insulating materials (thermal materials), vibration-proofing materials, buffer materials, civil engineering joints, icicle prevention panels, protection materials, lightweight soil, earth fill, artificial soil, tatami cores, building insulating materials, building joint materials, clearance-closing members, building protection materials, reflective materials, industrial trays, tubes, pipe covers, air-conditioner insulation pipes, gasket cores, concrete formworks, televisions, freezer refrigerators, cooking equipment, washing machines, air conditioners, lighting apparatuses, computers, magnet optical disks, copying machines, fax machines, printers, shoes, protectors, gloves, and sporting equipment.

[Production method of the foam molded product]

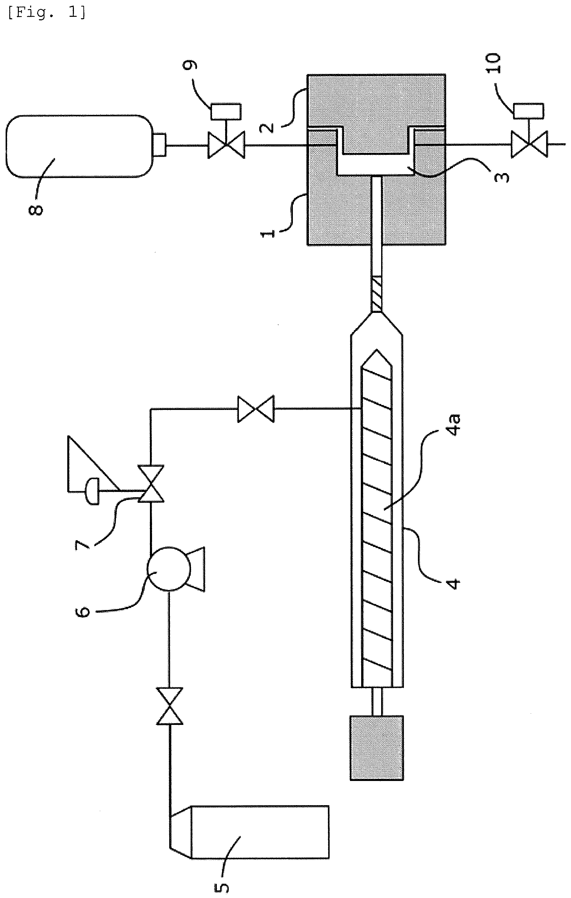

As to a foaming method of the foam molded product of the present invention, a preferred one is such a method wherein a thermoplastic polyester elastomer resin composition is impregnated with a gas of high pressure and, after that, the pressure is reduced (by releasing the pressure). Particularly, as to a molding method for achieving a uniform foaming and good molding cycle and low cost, a counter-pressure foam injection molding method is preferable in which a gas is infused into the cavity of a mold and a molten thermoplastic polyester elastomer resin composition is injected under pressure, when a melt mixture of a foaming agent and the thermoplastic polyester elastomer resin composition is subjected to an injection molding. Specifically, as illustrated in FIG. 1, a pressure nitrogen gas is infused into a cavity 3 formed between a plurality of molds 1 and 2 that are closed, using a counter-pressure device 8 so as to apply a prescribed pressure and thus achieve a pressurized state. Then, a molten-state thermoplastic polyester elastomer resin composition is, together with a chemical foaming agent and/or an inert gas in a supercritical state (hereinafter, sometimes collectively called a "foaming agent"), injected into the cavity. Then, the gas applied to the cavity by counter-pressure is rapidly released from an electromagnetic valve 10 immediately after completion of the filling of the resin or after a prescribed time, thereby the thermoplastic polyester elastomer resin composition is foamed. The prescribed pressure is preferably 0.01 MPa to 29.0 MPa. The pressure referred to herein is gauge pressure. The prescribed time is preferably 1 to 60 seconds. Here, the above method can be combined with a core-back foam injection molding method which obtains a foam molded product by moving one mold 2 in the mold opening direction so as to enlarge the volume of the cavity 3, immediately before the rapid release of the gas applied to the cavity by counter pressure, or at the same time as the release of the gas, or immediately after the release of the gas, or after a prescribed time after the release of the gas.

The thermoplastic polyester elastomer resin composition and the foaming agent can be mixed in advance in a plasticizing region 4a of an injection molding machine 4 before filled into the cavity 3. By appropriately adjusting the gas pressure of counter-pressure and the filling amount of the resin composition depending on the material when foam molding is performed as described above, a foam molded product having an aimed foaming ratio and rebound resilience can be obtained. The gas pressure of counter-pressure affects the fineness of cells and the foaming ratio. With even low pressure applied to the cavity, the depressurization rate is improved and high foaming can thus be achieved. On the other hand, with high pressure applied, a gas generated by the foaming agent is prevented from being released from the resin composition and cells thereby tend to be fine. With excessively high gas pressure applied, however, the foam moldability tends to be poor. Therefore, the pressure of counter-pressure is preferably 0.01 MPa to 29.0 MPa, more preferably 0.05 MPa to 15.0 MPa, and further preferably 0.5 MPa to 10.0 MPa. The pressure referred to herein is gauge pressure. When the filling amount of the resin composition is large, the foaming ratio is low. When the filling amount is small, the foaming ratio is high and the rebound resilience is high. Therefore, the filling amount of the resin composition is preferably 10% to 55%, more preferably 10% to 50%, further preferably 10% to 40%, and particularly preferably 10% to 30% of the volume of the cavity. Foam molding under the conditions described above can give a foam molded product that is light weight and has a high rebound resilience.

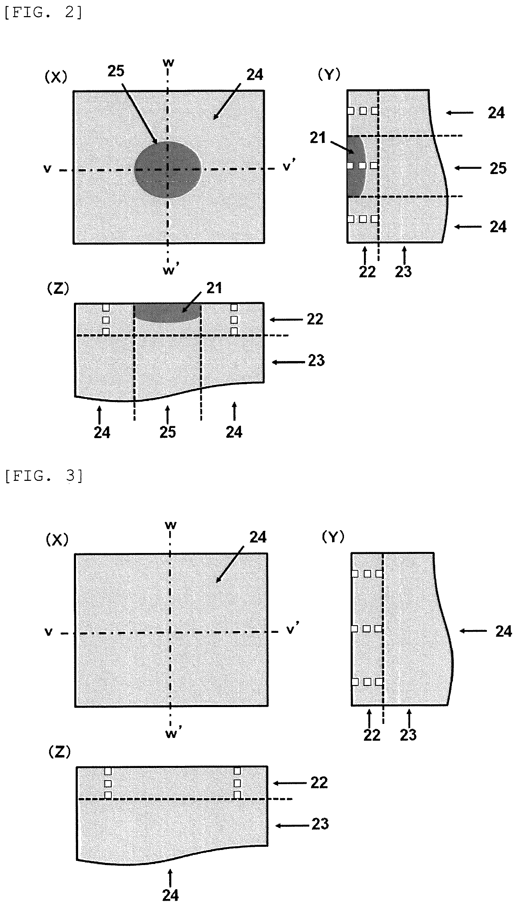

Described below is a reason why the foam molded product according to the present invention is the foam molded product (A) or the foam molded product (B) described above. FIGS. 2 (X) to 2 (Z) show a schematic structure of the foam molded product (B) . In the foam molded product (B), a foamed region 25 in which a non-foamed portion 21 is present is observed. On the contrary, the foam molded product (A) has a structure including no foamed region 25 and consisting of only a foamed region 24 in which the non-foamed portion 21 is not present. As described above, a molten-state thermoplastic polyester elastomer resin composition is, together with a foaming agent, filled into the cavity of a mold pressurized by counter-pressure to the extent of 10% to 55% of the volume of the cavity. In this process, a part of the molten resin composition contacts with the mold and is cooled, thereby forming the non-foamed portion. Thereafter, the thermoplastic polyester elastomer resin composition is foamed by releasing the pressure in the cavity and thus a foam molded product is obtained. The non-foamed portion, however, is left in a part of a surface layer of the foam molded product, and thus the foam molded product (B) is obtained. On the other hand, when the molten resin composition does not contact with the mold in the filling, or when the molten resin contacts only with a very small area of the mold, or when the pressure in the cavity is released before the molten resin in contact with the mold is fully cooled, the foam molded product (A) in which the non-foamed portion is not formed in any surface layer is obtained. Meanwhile, flattened cells are formed near the surface of the foamed region of the surface layer in which the non-foamed portion is not present because the thermoplastic polyester elastomer resin composition flows along the surface of the mold when foamed.

A chemical foaming agent which can be used for producing the foam molded product of the present invention is added to the resin melted in a resin melting zone of the molding machine, so as to act as a gas component which becomes a foaming nucleus or as a generating source thereof.

To be more specific, an inorganic compound such as ammonium carbonate, sodium bicarbonate, and azide compound, an organic compound such as azo compound, sulfohydrazide compound, and nitroso compound, etc. can be used as the chemical foaming agent. As to the above azide compound, there are exemplified terephthalazide and p-tert-butylbenzazide. Further, as to the above azo compound, there are exemplified diazocarbonamide (ADCA), 2,2-azoiso-butyronitrile, azohexahydrobenzonitrile and diazoamino- benzene. Among them, ADCA is preferred and is practically used. As to the above sulfohydrazide compound, there are exemplified benzene sufohydrazide, benzene 1,3-disulfohydrazide, diphenylsulfone 3,3-disulfone hydrazide and diphenyl oxide 4,4-disulfone hydrazide. As to the above nitroso compound, there is exemplified N,N-dinitrosopentaethylene tetramine (DNPT).

When the chemical foaming agent is used as a foaming agent, the chemical foaming agent also can be used as a foaming agent master batch which contains a thermoplastic resin having lower melting point than a decomposing temperature of the chemical foaming agent as a base material, in order to uniformly disperse in the thermoplastic polyester elastomer resin composition. As to the thermoplastic resin to be used as a base, there is no particular limitation so far as its melting point is lower than the decomposing temperature of the chemical foaming agent. Examples thereof are polystyrene (PS), polyethylene (PE) and polypropylene (PP). In that case, the compounding ratio of the chemical foaming agent to the thermoplastic resin is preferred to be from 10 to 100 parts by mass of the chemical foaming agent to 100 parts by mass of the thermoplastic resin. When the chemical foaming agent is less than 10 parts by mass, the amount of the master batch to the thermoplastic polyester elastomer resin composition becomes too much whereby the physical property may be lowered. When the chemical foaming agent is more than 100 parts by mass, it is difficult to make into the master batch in view of a problem of dispersibility of the chemical foaming agent.

When the inert gas in a supercritical state is used as the foaming agent, carbon dioxide and/or nitrogen can be used as the inert gas. When carbon dioxide and/or nitrogen in a supercritical state are/is used as the foaming agent, an amount thereof to 100 parts by mass of the thermoplastic polyester elastomer resin composition is preferred to be from 0.05 to 30 part (s) by mass, and more preferred to be from 0.1 to 20 part (s) by mass . When carbon dioxide and/or nitrogen in a supercritical state are/is less than 0.05 part by mass, uniform and fine foamed cell is hardly obtained while, when it is more than 30 parts by mass, appearance of a surface of the molded product tends to be deteriorated.

Although carbon dioxide or nitrogen in a supercritical state used as the foaming agent can be used solely, it is also possible to use a mixture of carbon dioxide and nitrogen. Nitrogen tends to be suitable for forming finer cell for the thermoplastic polyester elastomer resin composition. On the other hand, carbon dioxide can make an infusion amount of the gas relatively more and suitable for achieving the higher foaming ratio. Therefore, nitrogen and carbon dioxide can be freely mixed depending upon the adjusted state of the foamed structure body. The mixing ratio upon mixing is preferred to be within a range of from 1:9 to 9:1 in molar ratio.

As to the foaming agent used in the present invention, nitrogen in a supercritical state is more preferred in view of obtaining the uniform fine foam.

When the thermoplastic polyester elastomer resin composition in a molten-state is injected into the cavity 3 together with the foaming agent, the thermoplastic polyester elastomer resin composition in a molten-state and the foaming agent may be mixed in the plasticizing region 4a of the injection molding machine 4. Particularly when carbon dioxide and/or nitrogen in a supercritical state are/is used as the foaming agent, it is possible to adopt a method wherein, as shown in FIG. 1 for example, carbon dioxide and/or nitrogen in a gaseous state from a gas bomb 5 are/is compressed either directly or with a pressure-raising pump 6 and infused into the injection molding machine 4. It is necessary that carbon dioxide and/or nitrogen as such are/is in a supercritical state in an inner part of the molding machine in view of solubility, permeability and diffusing property into the thermoplastic polyester elastomer resin composition in a molten-state.

Hereinabove, the supercritical state is such a state wherein a discrimination between a gas phase and a liquid phase becomes nil under a specific temperature region and a specific pressure region as a temperature and a pressure of a substance resulting the gas phase and the liquid phase are increased. The temperature and the pressure at that time are called the critical temperature and the critical pressure, respectively. Thus, a substance in a supercritical state has characteristics of both gas and liquid. Accordingly, a fluid resulted in this state is called a critical fluid. As compared with a gas, the critical fluid as such has high density and, as compared with a liquid, it has low viscosity. Therefore, the critical fluid has such a characteristic property that it is very easily diffusible in a substance.

Examples

In order to demonstrate the effects of the present invention, Examples will be shown below although the present invention shall not be limited at all by those Examples.

In the Examples and Comparative Examples, following materials were used.

Thermoplastic polyester elastomer;

(Polyester elastomer A)

In accordance with a method mentioned in Japanese Patent Application Laid-Open (JP-A) No. 59491/97, a thermoplastic polyester elastomer containing 76% by mass of a soft segment was prepared using dimethyl terephthalate, 1,4-butanediol and poly(tetramethyleneoxide) glycol having a number-average molecular weight of 2000 as starting materials. This thermoplastic polyester elastomer was designated as a polyester elastomer A.

(Polyester elastomer B)

In accordance with a method mentioned in Japanese Patent Application Laid-Open (JP-A) No. 59491/97, a thermoplastic polyester elastomer containing 83% by mass of a soft segment was prepared using dimethyl terephthalate, 1, 4-butanediol and poly(tetramethyleneoxide) glycol having a number-average molecular weight of 2000 as starting materials. This thermoplastic polyester elastomer was designated as a polyester elastomer B.

(Polyester elastomer C)

In accordance with a method mentioned in Japanese Patent Application Laid-Open (JP-A) No. 59491/97, a thermoplastic polyester elastomer containing 67% by mass of a soft segment was prepared using dimethyl terephthalate, 1, 4-butanediol and poly(tetramethyleneoxide) glycol having a number-average molecular weight of 1000 as starting materials. This thermoplastic polyester elastomer was designated as a polyester elastomer C.

(Polyester elastomer D)

In accordance with a method mentioned in Japanese Patent Application Laid-Open (JP-A) No. 59491/97, a thermoplastic polyester elastomer containing 55% by mass of a soft segment was prepared using dimethyl terephthalate, 1, 4-butanediol and poly(tetramethyleneoxide) glycol having a number-average molecular weight of 1000 as starting materials. This thermoplastic polyester elastomer was designated as a polyester elastomer D.

(Polyester elastomer E)

In accordance with a method mentioned in Japanese Patent Application Laid-Open (JP-A) No. 59491/97, a thermoplastic polyester elastomer containing 28% by mass of a soft segment was prepared using dimethyl terephthalate, 1, 4-butanediol and poly(tetramethyleneoxide) glycol having a number-average molecular weight of 1000 as starting materials. This thermoplastic polyester elastomer was designated as a polyester elastomer E.

Thickener;

(Compound having an epoxy group: Styrene-type copolymer)

A pressurizing reactor of a stirring tank type of one-liter volume equipped with an oil jacket was provided. Temperature of the oil jacket was kept at 200°C. On the other hand, a mixed solution of monomers consisting of 89 parts by mass of styrene (St), 11 parts by mass of glycidyl methacrylate (GMA), 15 parts by mass of xylene (Xy) and 0.5 part by mass of di-tert-butyl peroxide (DTBP) as a polymerization initiator was placed in a material tank. This solution was continuously supplied from the material tank to the reactor with a constant supplying speed (48 g/min., retention time: 12 minutes), and then a reaction solution was continuously discharged from an outlet of the reactor so as to keep an amount of an inner liquid in the reactor constant (about 580 g). Inner temperature of the reactor at that time was kept at about 210°C. After 36 minutes from a stage wherein the inner temperature of the reactor became stable, the discharged reaction solution was introduced into a film distillation machine kept at 30 kPa of vacuum degree and 250°C of temperature so as to continuously remove evaporated components whereupon a styrene-type copolymer was obtained. According to GPC analysis (value being calculated as polystyrene), this styrene-type copolymer had a mass-average molecular weight of 8500 and a number-average molecular weight of 3300. Further, its epoxy value was 670 equivalents/$1 \times 10^6$ g and its epoxy value number (a number of average epoxy groups per molecule) was 2.2. This styrene-type copolymer had two or more glycidyl groups in a molecule.

(Compound having epoxy group: TEPIC-S)

A commercially available epoxy compound ("TEPIC-S" manufactured by Nissan Chemical Corporation, 1,3,5-tris(2,3-epoxypropyl)-1,3,5-triazine-2,4,6(1H,3H,5H)-trione) was provided.

(Compound having carbodiimide group: LA-1)

A commercially available polycarbodiimide ("CARBODILITE LA-1" manufactured by Nisshinbo Chemical Inc.)

was provided.

[Thermoplastic polyester elastomer resin composition]

The thermoplastic polyester elastomer and thickener were melted and kneaded according to a compounding composition mentioned in Table 1 using a biaxial screw extruder followed by making into pellets so as to give pellet of thermoplastic polyester elastomer resin composition. Physical properties of each of the resin compositions were measured by the method which will be mentioned later. Results thereof are shown in Table 1.

[MFR]

MFR (melt flow rate) of the thermoplastic polyester elastomer resin composition was measured in accordance with a measuring method mentioned in ASTM D1238 wherein a load was 2,160 g and a measuring temperature was 230°C. Before the measurement, the thermoplastic polyester elastomer resin composition had been dried (100°C, 3 to 5 hours) so as to achieve a moisture percentage of 0.1% by mass or less.

Examples 1 to 11 and Comparative Examples 1 and 2

Next, a foam molded product was produced using the thermoplastic polyester elastomer resin composition obtained above by the counter-pressure method described above. A mold was used that had a mold closing force of 10000 kN and formed a cavity with a width of 360 mm, a length of 190 mm, and a thickness of 15.0 mm when closed. A nitrogen gas having the pressure (pressure of counter-pressure) shown in Table 1 was infused into the cavity of this mold using counter-pressure. Nitrogen in a supercritical state was infused into a molten-state thermoplastic polyester elastomer resin composition in a plasticizing region of an electric injection molding machine provided with a screw having a screw diameter of 60 mm and a screw stroke of 300 mm. The resin was short-shot injected and filled at the resin composition amount shown in Table 1 (the filling amount of the resin composition relative to the volume of the cavity) from a gate (central portion of the surface with a width of 360 mm and a length of 190 mm) into the cavity of the mold having the surface temperature thereof adjusted to 50°C. The thermoplastic polyester elastomer resin composition was foamed by rapidly releasing the nitrogen gas used for pressurization by counter-pressure immediately after the filling, and a foam molded product was thus obtained.

Comparative Example 3

A foam molded product was produced by a mold expansion method (core-back foam injection molding method). Used as a mold was a plate-producing mold consisting of a fixed mold and a movable mold. The plate-producing mold is capable of forming a cavity with a width of 360 mm, a length of 190 mm, and a thickness of 3.0 mm when closed, and is capable of forming a cavity with the same width, the same length, and a thickness of 3.0 mm + the core-backed distance (mm) when the core is backed in the mold opening direction. Specifically, nitrogen in a supercritical state was infused in a plasticizing region of an electric injection molding machine that had a mold closing force of 10000 kN and provided with a screw having a screw diameter of 60 mm and a screw stroke of 300 mm. The resin was injected and filled into the mold having the surface temperature thereof adjusted to 50°C, so as to fully pack the mold. Then, at the stage in which a non-foamed skin layer of about 700 $\mu$m thickness was formed by external injection pressure and internal foaming pressure, the movable mold was moved by 12.0 mm in the mold opening direction so as to expand the volume of the cavity, and a foam molded product was thus obtained.

The foam molded products prepared in Examples 1 to 11 and Comparative Examples 1 to 3 were subjected to the following evaluations. Results are shown in Table 1.

[Configuration of foam molded product]

The surface of the foam molded product was observed by visual inspection. It was estimated whether a non-foamed portion was present, from the presence or absence of an uneven portion (sink mark) caused by molding contraction and the generation of a pit. When the foam molded product was estimated as having a non-foamed portion due to the presence of an uneven portion and/or a pit, the foam molded product was cut along a cross-section (w-w' cross-section in FIG. 2(X)) in which the non-foamed portion was in the center, and used as a cross-sectional-observation sample. Then, the foam molded product was further cut along another cross-section (v-v' cross-section in FIG. 2(X)) perpendicular to the first cut cross-section and used as a cross-sectional-observation sample. When the foam molded product was estimated as having no non-foamed portion due to the absence of an uneven portion and a pit, the foam molded product was cut along the center cross-section (w-w' cross-section in FIG. 3(X)) of the foam molded product and used as a cross-sectional-observation sample. Then, the foam molded product was further cut along another cross-section (v-v' cross-section in FIG. 3(X)) perpendicular to the first cut cross-section and used as a cross-sectional-observation sample.

A cross-sectional photograph of a surface layer of the foam molded product (cross-sectional-observation sample) was captured with scanning electron microscope SU1510 manufactured by Hitachi High-Technologies Corporation. Through image processing of the cross-sectional photograph, the cell density was calculated by the following formula in a 200 μm × 200 μm region of the surface layer ranging from the surface of the foam molded product to a depth of 1000 μm, and the portion having a cell density of 10% or less was defined as the non-foamed portion.

$$\texttt{Cell density (\%) = [(total area of cells (}\mu\texttt{m}^2\texttt{))/40,000}$$
$$\texttt{(}\mu\texttt{m}^2\texttt{)] } \times \texttt{ 100}$$

In the case of the foam molded product estimated as having the non-foamed portion, the 200 μm × 200 μm observation region was, for the measurement, set at five locations each around the surface, around a depth of 500 μm, and around a depth of 1000 μm (depths represented by white squares in a surface layer 22 of FIGS. 2(Y) and 2(Z)) in the surface layer ranging from the surface to a depth of 1000 μm. In the case of the foam molded product estimated as not having the non-foamed portion, the 200 μm × 200 μm observation region was, for the measurement, set at five locations each around the surface, around a depth of 500 μm, and around a depth of 1000 μm (depths represented by white squares in a surface layer 22 of FIGS. 3(Y) and 3(Z)) in the surface layer ranging from the surface to a depth of 1000 μm. When all the three locations in the depth direction from the surface were determined to have no non-foamed portion by this measurement, the region was determined to be a region consisting of only a foamed region in which the non-foamed portion was not present.

The presence or absence of the non-foamed portion was thereby determined, and the foam molded products were sorted into three categories, i.e., a foam molded product (A) that is constituted from a surface layer consisting of only a foamed region in which a non-foamed portion is not present; a foam molded product (B) that has a surface layer consisting of both a foamed region in which the non-foamed portion is present and a foamed region in which the non-foamed portion is not present; and a foam molded product (C) that has a surface layer consisting of only a foamed region in which a non-foamed portion (non-foamed skin layer) is present.

[Proportion of area of foamed region in which non-foamed portion is present]

As to a surface layer (B) of the foam molded product (B), the foamed region in which the non-foamed portion is present was identified through observation by visual inspection or from the cross-sectional photograph. Then, the proportion of the area thereof in relation to the area of the surface of the foam molded product was calculated by the following formula. When the foam molded product (B) has a plurality of surfaces corresponding to the surface layer (B), a larger proportion is used.

$$\texttt{Proportion (\%) of area of foamed region in which}$$
$$\texttt{non-foamed portion is present = [(area (mm}^2\texttt{) of foamed region}$$
$$\texttt{in which non-foamed portion is present)/(area (mm}^2\texttt{) of surface}$$
$$\texttt{of foam molded product)] } \times \texttt{ 100}$$

[Proportion of area of foamed region in which non-foamed portion is present in relation to total surface area]

Similarly to the method in "Proportion of area of foamed region in which non-foamed portion is present", "the area of the foamed region in which the non-foamed portion is present" was determined. When there were a plurality of surfaces corresponding to the surface layer (B) in the foam molded product (B), "the areas of the foamed regions in which the non-foamed portion is present" of all the surfaces were totaled. By the following formula was calculated the proportion of the area of the foamed region in which the non-foamed portion was present in relation to the total surface area of the foam molded product (B).

$$\text{Proportion (\%) of area of foamed region in which}$$
$$\text{non-foamed portion is present in relation to total surface area}$$
$$= [(\text{area (mm}^2) \text{ of foamed region in which non-foamed portion is}$$
$$\text{present})/(\text{surface area (mm}^2) \text{ of foam molded product})] \times 100$$

[Average aspect ratio of a flattened cell layer and average aspect ratio of a circular cell layer]

A cross-sectional photograph of the foam molded product (cross-sectional-observation sample) was captured with scanning electron microscope SU1510 manufactured by Hitachi High-Technologies Corporation. It was confirmed that the surface layer ranging from the surface to a depth of 1000 μm has a layer including flattened cells and that an inner layer deeper than 1000 μm from the surface has a layer including circular cells. Through image processing of the cross-sectional photograph, at least 100 adjacent flattened cells or circular cells were measured by a caliper for the major axis and the minor axis. The average aspect ratio (length of major axis/length of minor axis) of the 100 cells was obtained. This procedure was performed at arbitrary three locations in each of the layers. The value obtained by averaging the three average values obtained at the three locations was defined as an average aspect ratio of a flattened cell layer or a circular cell layer.

[Density (Apparent density)]

Size of the foam molded product was measured by slide calipers. Mass thereof was measured by an electron balance. The density (apparent density) was calculated by the following formula.

$$\text{Density (g/cm}^3) = (\text{mass of foam molded product})/(\text{volume}$$
$$\text{of foam molded product})$$

[Average cell diameter/maximum cell diameter of the cells in the circular cell layer]

In the measurement of the average aspect ratio of the cells in the circular cell layer, the equivalent circle diameter corresponding to the area of a circular cell is defined as a cell diameter. The average value of such 100 cell diameters was obtained. This operation was conducted at arbitrary three locations of the circular cell layer. The three mean values obtained in the three locations were averaged and adopted as the average cell diameter.
The largest cell diameter among the cell diameters of the cells observed above was taken as the maximum cell diameter.

[Rebound resilience]

Rebound resilience was measured according to a method mentioned in JIS K 6400. A manually measuring tester was used. A steel ball was dropped from a stipulated height (H) to a foam molded product. The maximum height (h) by rebound was read. Rebound resilience was calculated by the following formula.

$$\text{Rebound resilience (\%) = (maximum height (h) by}$$
$$\text{rebound)/(stipulated height (H))} \times 100$$

Three measurements were conducted within one minute. Median thereof was determined to calculate the rebound resilience. Rebound resilience (A) is a rebound resilience of area of foamed region in which non-foamed portion is not present. Rebound resilience (B) is a rebound resilience of area of foamed region in which non-foamed portion is present.

[Surface smoothness]

The surface smoothness of the foam molded product was evaluated by visual inspection according to the three criteria described below.

○: Unevenness is not observed on the surface of the molded product.
△: Unevenness is observed in a part of the surface of the molded product.
✕: Unevenness is observed on the entire surface of the molded product.

[Mold followability]

A foam molded product was produced by using a mold having a cavity shape in a dimension with a width of 360 mm, a length of 190 mm, and a thickness of 15.0 mm. When the obtained foam molded product has a thickness of 14.0 mm or more, it was determined as having been able to follow the mold and evaluated as "o". When the obtained foam molded product has a thickness of less than 14.0 mm, it was determined as not having been able to follow the mold and evaluated as "✕".

[Table 1]

| | | | Example 1 | Example 2 | Example 3 | Example 4 | Example 5 |
|---|---|---|---|---|---|---|---|
| Thermoplastic polyester elastomer resin | Polyester elastomer A | Part(s) by mass | 100 | 100 | 100 | 100 | 100 |
| | Polyester elastomer B | Part(s) by mass | | | | | |
| | Polyester elastomer C | Part(s) by mass | | | | | |
| | Polyester elastomer D | Part(s) by mass | | | | | |
| | Polyester elastomer E | Part(s) by mass | | | | | |
| Thickener | Styrene-type copolymer | Part(s) by mass | 1.5 | 1.5 | 0.1 | 3 | |
| | TEPIC-S | Part(s) by mass | | | | | 0.12 |
| | LA-1 | Part(s) by mass | | | | | |
| Properties of composition | Soft segment content | % by mass | 76 | 76 | 76 | 76 | 76 |
| | MFR | g/10 min | 16 | 16 | 26 | 6 | 18 |
| Processing conditions | Pressure of counter-pressure | MPa | 3.0 | 5.0 | 5.0 | 5.0 | 5.0 |
| | Filling amount of the resin composition relative to the volume of the cavity | % | 20 | 20 | 20 | 20 | 20 |
| | Core back amount | mm | - | - | - | - | - |
| Properties of foam molded product | Configuration of foam | - | (A) | (B) | (B) | (B) | (B) |
| | Proportion of area of foamed region in which non-foamed portion is present | % | 0 | 15 | 16 | 13 | 14 |
| | Proportion of area of foamed region in which non-foamed portion is present in relation to total surface area | % | 0 | 12 | 12 | 10 | 11 |
| | Average aspect ratio of a flattened cell layer | - | 8.8 | 10.2 | 11.4 | 8.9 | 10.5 |
| | Average aspect ratio of a circular cell layer | - | 1.1 | 1.2 | 1.4 | 1.1 | 1.3 |
| | Density | g/cm$^3$ | 0.21 | 0.21 | 0.21 | 0.21 | 0.21 |
| | Average cell diameter of a circular cell layer | μm | 230 | 190 | 270 | 170 | 230 |
| | Maximum cell diameter of a circular cell layer | μm | 820 | 710 | 870 | 600 | 800 |
| | Rebound resilience (A) | % | 73 | 74 | 71 | 73 | 70 |
| | Rebound resilience (B) | % | - | 68 | 66 | 66 | 65 |
| | Surface smoothness | - | ○ | △ | △ | △ | △ |
| | Mold followability | - | ○ | ○ | ○ | ○ | ○ |

| | | | Example 6 | Example 7 | Example 8 | Example 9 | Example 10 |
|---|---|---|---|---|---|---|---|
| Thermoplastic polyester elastomer resin | Polyester elastomer A | Part(s) by mass | 100 | | | | |
| | Polyester elastomer B | Part(s) by mass | | 100 | 100 | | |
| | Polyester elastomer C | Part(s) by mass | | | | 100 | |
| | Polyester elastomer D | Part(s) by mass | | | | | 100 |
| | Polyester elastomer E | Part(s) by mass | | | | | |
| Thickener | Styrene-type copolymer | Part(s) by mass | | 2 | 2 | 1 | 1 |
| | TEPIC-S | Part(s) by mass | | | | | |
| | LA-1 | Part(s) by mass | 1 | | | | |
| Properties of composition | Soft segment content | % by mass | 76 | 83 | 83 | 67 | 55 |
| | MFR | g/10 min | 15 | 17 | 17 | 14 | 13 |
| Processing conditions | Pressure of counter-pressure | MPa | 5.0 | 3.0 | 5.0 | 5.0 | 5.0 |
| | Filling amount of the resin composition relative to the volume of the cavity | % | 20 | 20 | 20 | 20 | 20 |
| | Core back amount | mm | - | - | - | - | - |
| Properties of foam molded product | Configuration of foam | - | (B) | (A) | (B) | (B) | (B) |
| | Proportion of area of foamed region in which non-foamed portion is present | % | 18 | 0 | 12 | 20 | 28 |
| | Proportion of area of foamed region in which non-foamed portion is present in relation to total surface area | % | 14 | 0 | 10 | 18 | 24 |
| | Average aspect ratio of a flattened cell layer | - | 11.1 | 9.2 | 11.5 | 9.5 | 8.5 |
| | Average aspect ratio of a circular cell layer | - | 1.5 | 1.2 | 1.3 | 1.3 | 1.2 |
| | Density | g/cm³ | 0.21 | 0.22 | 0.21 | 0.23 | 0.24 |
| | Average cell diameter of a circular cell layer | μm | 290 | 290 | 280 | 200 | 180 |
| | Maximum cell diameter of a circular cell layer | μm | 900 | 930 | 910 | 680 | 660 |
| | Rebound resilience (A) | % | 69 | 72 | 73 | 62 | 56 |
| | Rebound resilience (B) | % | 65 | - | 68 | 57 | 50 |
| | Surface smoothness | - | △ | ○ | △ | △ | △ |
| | Mold followability | - | ○ | ○ | ○ | ○ | ○ |

| | | Unit | Example 11 | Comparative Example 1 | Comparative Example 2 | Comparative Example 3 |
|---|---|---|---|---|---|---|
| Thermoplastic polyester elastomer resin | Polyester elastomer A | Part(s) by mass | | 100 | 100 | 100 |
| | Polyester elastomer B | Part(s) by mass | | | | |
| | Polyester elastomer C | Part(s) by mass | | | | |
| | Polyester elastomer D | Part(s) by mass | | | | |
| | Polyester elastomer E | Part(s) by mass | 100 | | | |
| Thickener | Styrene-type copolymer | Part(s) by mass | 1 | | 5 | 1.5 |
| | TEPIC-S | Part(s) by mass | | | | |
| | LA-1 | Part(s) by mass | | | | |
| Properties of composition | Soft segment content | % by mass | 28 | 76 | 76 | 76 |
| | MFR | g/10 min | 12 | 31 | 3 | 16 |
| Processing conditions | Pressure of counter-pressure | MPa | 5.0 | 5.0 | 5.0 | - |
| | Filling amount of the resin composition relative to the volume of the cavity | % | 20 | 20 | 20 | 100 |
| | Core back amount | mm | - | - | - | 12.0 |
| | Configuration of foam | - | (B) | (B) | (B) | (C) |
| | Proportion of area of foamed region in which non-foamed portion is present | % | 35 | 20 | 56 | 100 |
| | Proportion of area of foamed region in which non-foamed portion is present in relation to total surface area | % | 31 | 17 | 49 | 90 |
| Properties of foam molded product | Average aspect ratio of a flattened cell layer | - | 12.6 | 9.8 | 5.1 | - |
| | Average aspect ratio of a circular cell layer | - | 1.2 | 1.8 | 1.6 | 1.3 |
| | Density | g/cm³ | 0.25 | 0.22 | 0.52 | 0.21 |
| | Average cell diameter of a circular cell layer | µm | 150 | 320 | 300 | 490 |
| | Maximum cell diameter of a circular cell layer | µm | 580 | 1860 | 500 | 690 |
| | Rebound resilience (A) | % | 50 | 63 | 49 | - |
| | Rebound resilience (B) | % | 44 | 60 | 44 | 66 |
| | Surface smoothness | - | △ | △ | △ | × |
| | Mold followability | - | ○ | ○ | × | ○ |

As is clear from Table 1, Examples 1 to 11 that are within the range of the present invention are the foam molded product (A) which is constituted from a surface layer consisting of only a foamed region in which a non-foamed portion is not present, or the foam molded product (B) which has a surface layer consisting of both a foamed region in

20

which the non-foamed portion is present and a foamed region in which the non-foamed portion is not present. The foam molded products of Examples 1 to 11 are excellent in mold followability, and exhibit light weight and high rebound resilience because they include an inner circular cell layer that includes cells having a predetermined average cell diameter and a predetermined maximum cell diameter. The foam molded products (B) of Examples 2 to 6, and 8 to 11 and Comparative Examples 1 and 2 have a largest-area non-foamed portion in the surface opposite from the surface with a gate, and also have a non-foamed portion having almost the same area in the surface with the gate. It is understood from Examples 2 to 6, and 8 to 11 that the foamed region in which the non-foamed portion is not present has a higher rebound resilience than that of the foamed region in which the non-foamed portion is present. The foam molded products of Examples 1 and 7 as a whole are constituted from only the foamed region in which the non-foamed portion is not present, and have flattened cells around the entire surface of the foam molded product, and thus they have excellent surface smoothness. In contrast, Comparative Example 1, which was obtained by foam molding of a polyester elastomer containing no thickener, exhibits a large value for the rebound resilience, but this value is lower than those in Examples 1 to 6 in which the same polyester elastomer A was used. This is because Comparative Example 1 includes a circular cell layer that includes cells having a large maximum cell diameter. In Comparative Example 2, the thermoplastic polyester elastomer resin composition has a smaller MFR value than the prescribed MFR, resulting in decrease of the flowability, poor foam moldability, and deterioration of the mold followability. The foam molded product of Comparative Example 3 was obtained by foam molding according to a core-back foam injection molding method and was sufficiently reduced in weight. The foam molded product of Comparative Example 3 as a whole, however, consists of a sandwich structure including the non-foamed layer and the foamed layer and has poor surface smoothness due to thereby generated unevenness on the entire surface of the molded product.

Industrial Applicability

The foam molded product of the present invention is not only excellent in its light weight but also can achieve very high rebound resilience and excellent surface smoothness. Further, they exhibit a uniform foamed state in spite of their high foaming ratio, high heat resistance, high water resistance and high molding stability. Accordingly, the foam molded product of the present invention can be applied even to the parts which are necessary to have high reliability.

Explanation of Reference Number

**[0105]**

1: Mold (for fixation)
2: Mold (for movement)
3: Cavity
4: Injection molding machine
4a: Plasticizing region
5: Gas bomb
6: Pressure-raising pump
7: Pressure-controlling bulb
8: Counter-pressure device
9: Electromagnetic valve for intake
10: Electromagnetic valve for exhaust
21: Non-foamed portion
22: Surface layer
23: Inner layer
24: Area of foamed region in which non-foamed portion is not present
25: Area of foamed region in which non-foamed portion is present

**Claims**

1. A thermoplastic polyester elastomer resin composition for counter-pressure foam molding, containing a thermoplastic polyester elastomer and a thickener, wherein the thermoplastic polyester elastomer is prepared by bonding a hard segment and a soft segment, wherein the hard segment consists of polyester constituted from aromatic dicarboxylic acid and aliphatic and/or alicyclic diol as constituting components, wherein the soft segment is at least one member selected from a group consisting of aliphatic polyether, aliphatic polyester and aliphatic polycarbonate, wherein the thermoplastic polyester elastomer has a soft segment content of 25 to 90% by mass, and wherein a content of the thickener is 0.05 to 4.5 parts by mass relative to 100 parts by mass of the thermoplastic polyester elastomer.

2. The thermoplastic polyester elastomer resin composition according to claim 1, wherein the thickener is a reactive compound having an epoxy group.

3. The thermoplastic polyester elastomer resin composition according to claim 1 or 2, wherein an MFR of the thermoplastic polyester elastomer resin composition measured at a load of 2, 160 g and a measurement temperature of 230°C is 5 to 30 g/10 min.

4. A foam molded product including a continuous phase formed of the thermoplastic polyester elastomer resin composition according to any of claims 1 to 3, wherein

the foam molded product is constituted from, as a surface layer ranging from a surface of the foam molded product to a depth of 1000 $\mu$m, a surface layer consisting of only a foamed region in which a non-foamed portion having a cell density of 10% or less is not present, or
the foam molded product has, as a surface layer ranging from a surface of the foam molded product to a depth of 1000 $\mu$m, a surface layer consisting of both a foamed region in which the non-foamed portion is present and a foamed region in which the non-foamed portion is not present,
and wherein the foam molded product has a density of 0.01 to 0.70 g/cm$^3$.

5. The foam molded product according to claim 4, wherein the foamed region of the surface layer in which the non-foamed portion is not present has a flattened cell layer that includes cells having an average aspect ratio of 4.0 to 15.0.

6. The foam molded product according to claim 4 or 5, wherein the foam molded product further has, in an inner layer deeper than the depth of 1000 $\mu$m from the surface, a circular cell layer that includes cells having an average aspect ratio of 1.0 to 2.0.

7. The foam molded product according to any of claims 4 to 6, wherein the rebound resilience is 50% to 90%.

8. The foam molded product according to claim 6 or 7, wherein the cells in the circular cell layer of the inner layer have an average cell diameter of 10 to 350 $\mu$m and a maximum cell diameter of 100 to 1000 $\mu$m.

[Fig. 1]

[FIG. 2]

(X)

25    w    24

v ——————————————— v'

w'

(Y)

21    24

25

22  23    24

(Z)

21

22

23

24    25    24

[FIG. 3]

(X)

w    24

v ——————————————— v'

w'

(Y)

24

22  23

(Z)

22

23

24

## INTERNATIONAL SEARCH REPORT

<table>
<tr><td>International application No.</td></tr>
<tr><td>**PCT/JP2021/038277**</td></tr>
</table>

### A. CLASSIFICATION OF SUBJECT MATTER

*B29C 45/00*(2006.01)i; *B29C 45/56*(2006.01)i; *C08L 67/02*(2006.01)i; *C08J 9/04*(2006.01)i; *C08J 9/12*(2006.01)i; *C08J 9/34*(2006.01)i; *C08L 63/00*(2006.01)i; *B29C 44/00*(2006.01)i; *C08G 63/668*(2006.01)i

FI: C08J9/04 101; C08L67/02; B29C45/00; B29C44/00 D; B29C45/56; C08G63/668; C08L63/00 A; C08J9/04 CFD; C08J9/12 CFD; C08J9/34 CFD

According to International Patent Classification (IPC) or to both national classification and IPC

### B. FIELDS SEARCHED

Minimum documentation searched (classification system followed by classification symbols)

B29C45/00; B29C45/56; C08L67/02; C08J9/04; C08J9/12; C08J9/34; C08L63/00; B29C44/00; C08G63/668

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2019-006927 A (TOYOBO CO., LTD.) 17 January 2019 (2019-01-17) claims, paragraphs [0029]-[0040], [0044], [0045], [0047], [0049], [0057]-[0071], examples | 1-4, 6-8 |
| Y | JP 06-506724 A (MASSACHUSETTS INSTITUTE OF TECHNOLOGY) 28 July 1994 (1994-07-28) claims, page 5, upper right column, lines 1, 2, page 7, upper left column, line 13 to upper right column, line 1, page 9, lower left column, line 13 to page 11, upper left column, line 15, fig. 2, 12, 13, 18, examples | 1-4, 6-8 |
| A | JP 2019-006926 A (TOYOBO CO., LTD.) 17 January 2019 (2019-01-17) claims, examples, entire text | 1-8 |
| A | JP 2013-032492 A (NITTO DENKO CORP.) 14 February 2013 (2013-02-14) claims, examples, entire text | 1-8 |
| A | JP 2003-138054 A (TORAY INDUSTRIES, INC.) 14 May 2003 (2003-05-14) claims, examples, entire text | 1-8 |

☐ Further documents are listed in the continuation of Box C.  ☑ See patent family annex.

| | | |
|---|---|---|
| \* | Special categories of cited documents: | "T" later document published after the international filing date or priority date and not in conflict with the application but cited to understand the principle or theory underlying the invention |
| "A" | document defining the general state of the art which is not considered to be of particular relevance | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **07 December 2021** | **21 December 2021** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

**INTERNATIONAL SEARCH REPORT**
Information on patent family members

International application No.

**PCT/JP2021/038277**

| Patent document cited in search report | | | Publication date (day/month/year) | Patent family member(s) | | | Publication date (day/month/year) |
|---|---|---|---|---|---|---|---|
| JP | 2019-006927 | A | 17 January 2019 | JP | 6358369 | B1 | |
| | | | | US | 2020/0123341 | A1 | |
| | | | | claims, paragraphs [0040]-[0054], [0059], [0060], [0062], [0064], [0073]-[0099], examples | | | |
| | | | | WO | 2019/004121 | A1 | |
| | | | | EP | 3647347 | A1 | |
| | | | | TW | 201906906 | A | |
| | | | | CN | 110809599 | A | |
| | | | | KR | 10-2020-0015789 | A | |
| JP | 06-506724 | A | 28 July 1994 | JP | 2625576 | B2 | |
| | | | | US | 5158986 | A | |
| | | | | claims, column 4, lines 13-17, column 6, lines 3-15, column 10, line 5 to column 12, line 45, examples | | | |
| | | | | US | 5334356 | A | |
| | | | | WO | 1992/017533 | A1 | |
| | | | | EP | 580777 | A1 | |
| | | | | EP | 985511 | A2 | |
| | | | | CA | 2107355 | A | |
| | | | | KR | 10-0171911 | B | |
| | | | | CA | 2107355 | A1 | |
| JP | 2019-006926 | A | 17 January 2019 | JP | 6358368 | B1 | |
| | | | | WO | 2019/004120 | A1 | |
| | | | | TW | 201905053 | A | |
| JP | 2013-032492 | A | 14 February 2013 | US | 2013/0011657 | A1 | |
| | | | | claims, examples | | | |
| | | | | EP | 2543698 | A1 | |
| | | | | CN | 102863748 | A | |
| | | | | KR | 10-2013-0005240 | A | |
| | | | | TW | 201305259 | A | |
| JP | 2003-138054 | A | 14 May 2003 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6358369 B
- JP 2011068819 A
- JP 2003342343 A
- JP 9059491 A